# FASCICULE DE BREVET EUROPEEN

(11) **EP 2 044 646 B1**
(45) Date de publication et mention de la délivrance du brevet: **30.07.2014**
(21) Numéro de dépôt: 07803965.8
(22) Date de dépôt: 28.06.2007
(51) Int. Cl.: H01M 2/10

(54) **DISPOSITIF COMPACT D'ALIMENTATION ÉLECTRIQUE POUR UN VÉHICULE AUTOMOBILE ÉQUIPE DE MOYENS DE REFROIDISSEMENT RÉGULES**
KOMPAKTE ENERGIEVERSORGUNGSVORRICHTUNG FÜR EIN KRAFTFAHRZEUG MIT GEREGELTER KÜHLVORRICHTUNG
COMPACT POWER SUPPLY DEVICE FOR A MOTOR VEHICLE COMPRISING REGULATED COOLING MEANS

(30) Priorité: 30.06.2006 FR 0652741
(43) Date de publication de la demande: 08.04.2009
(73) Titulaire: VALEO EQUIPEMENTS ELECTRIQUES MOTEUR, 94000 Créteil (FR)
(72) Inventeur: FAKES, Michel, F-59113 Seclin (FR); TELLIER, Richard, F-75011 Paris (FR); VASILESCU, Claudiu, F-75020 Paris (FR); GUERIN, Fabien, F-92320 Chatillon (FR); MASFARAUD, Julien, F-75010 Paris (FR); ABADIA, Roger, F-93360 Neuilly-plaisance (FR)
(74) Mandataire: Gamonal, Didier
(86) Numéro de dépôt international: PCT/FR2007/051556
(87) Numéro de publication internationale: WO 2008/001017

(56) Documents cités:
- DE-A1- 10 202 807
- DE-A1- 19 730 678
- US-A1- 2005 058 892
- US-A1- 2005 174 092
- US-A1- 2006 073 378

## Description

### DOMAINE TECHNIQUE DE L'INVENTION

L'invention propose un dispositif d'alimentation électrique pour un véhicule automobile, qui est destiné à relier au moins une machine électrique à une batterie du véhicule, et qui comporte un boîtier dans lequel est agencée au moins une unité de stockage d'énergie électrique, et comportant des moyens de refroidissements de la dite au moins une unité de stockage, ledit boîtier comportant un bac de réception d'au moins une unité de stockage d'énergie électrique.

### ETAT DE LA TECHNIQUE

On connaît de nombreux exemples de dispositifs de ce type.

De tels dispositifs d'alimentation électrique sont par exemple utilisés pour l'alimentation de machines électriques de véhicules automobiles de type électrique et/ou hybride, c'est à dire combinant une machine électrique et un moteur thermique conventionnel, pour lesquels il est important de pouvoir récupérer l'énergie cinétique afin de recharger la batterie du véhicule et d'approvisionner le réseau de bord en puissance électrique. Cette fonction est couramment appelée freinage récupératif. Une batterie de type métal hydrure est par exemple utilisée.

Ces dispositifs d'alimentation électrique posent toutefois de nombreux problèmes.

En effet, les unités de stockage d'énergie subissent de nombreux cycles de charge et de décharge. Par exemple, lorsque le véhicule automobile démarre, il se produit une décharge d'électricité très intense. Par exemple encore, les unités de stockage sont chargées avec un courant électrique de forte intensité lors des périodes de freinage récupératif.

Lorsque du courant électrique est libéré, lors des opérations de décharge, ou stocké, lors des opérations de charge, les unités de stockage dégagent de la chaleur. La quantité de chaleur dégagée est proportionnelle à l'intensité du courant électrique qui circule en charge ou en décharge.

De plus, ces cycles de charge et de décharge sont susceptibles de se succéder à un rythme très élevé, notamment lorsque le véhicule roule en ville et que le conducteur est amené à arrêter et à redémarrer fréquemment le véhicule.

Or, pour que les unités de stockage puissent stocker efficacement le courant électrique, elles doivent être maintenues dans une plage de températures de fonctionnement qui est bornée par une température maximale de fonctionnement et par une température minimale de fonctionnement.

Lorsque les cycles de charge et de décharge s'enchaînent rapidement, la température des unités de stockage est susceptible de monter très vite au-delà de la température maximale de fonctionnement. La montée en température des unités de stockage est d'autant plus rapide que les unités de stockage sont agencées dans un bac fermé.

Dans les documents US 2006/073378, US 2005/058892, DE 197 30 678 et DE 10202 807 on a prévu pour ce faire des moyens de refroidissement pour dissiper ou évacuer la chaleur dégagée par ces unités de stockage d'énergie. ,

Dans le document DE 197 30 678, conforme au préambule de la revendication 1, on fait appel à un échangeur de chaleur associé à une batterie à haute température. Cet échangeur de chaleur est, par l'intermédiaire d'une pompe, traversé par le fluide de refroidissement du moteur thermique.

### RESUME DE L'INVENTION

L'invention a pour but de proposer des moyens efficaces de refroidissement du dispositif d'alimentation électrique permettant d'améliorer la quantité de chaleur évacuée par les moyens de refroidissement.

Dans ce but, l'invention propose un dispositif d'alimentation selon la revendication 1.

Grâce à l'invention on régule de manière efficace la quantité de chaleur à dissiper. On obtient ainsi un meilleur refroidissement des unités de stockage d'énergie sous la forme d'Ultracapicités

Selon d'autres caractéristiques non limitatives de l'invention prises isolément ou en combinaison :
- la quantité de chaleur destinée à être dissipée par l'un des dispositifs de refroidissement est différente de la quantité de chaleur destinée à être dissipée par un autre des dispositifs de refroidissement ;
- les moyens de commande sont aptes à réguler la quantité de chaleur apte à être dissipée par chaque dispositif de refroidissement ;
- les moyens de refroidissement comportent un dispositif de refroidissement doté d'un tronçon froid d'un circuit de refroidissement du véhicule ;
- les moyens de refroidissement comportent au moins un dissipateur à ailettes ;
- les moyens de refroidissement comportent des moyens de production d'un flux d'air orienté vers ledit au moines un dissipateur à ailettes et qui est commandé par les moyens de commande ;
- les moyens de refroidissement comportent plusieurs dissipateurs à ailettes et des moyens pour produire un flux d'air qui est associé à chaque dissipateur à ailettes ;
- les moyens de refroidissement comportent au moins un dissipateur à ailettes qui est directement en contact avec ladite au moins une unité de stockage ;
- le dispositif d'alimentation comporte des moyens d'isolation thermique de ladite unité de stockage.

### BREVE DESCRIPTION DES FIGURES

D'autres caractéristiques et avantages de l'invention apparaîtront à la lecture de la description détaillée qui suit pour la compréhension de laquelle on se reportera aux figures annexées parmi lesquelles :
- la figure 1 est un schéma de principe d'un dispositif d'alimentation électrique selon l'invention,
- la figure 2 est une vue éclatée en perspective d'un premier mode de réalisation d'un dispositif d'alimentation électrique,
- la figure 3 est une représentation schématique en perspective d'un éclaté du bac du dispositif d'alimentation représenté à la figure 2, comportant deux dissipateurs à ailettes montés sur le bac,
- la figure 4 est une vue similaire à celle de la figure 3, dans laquelle le bac porte un seul dissipateur à ailettes, et
- la figure 5 est une vue en détails des unités de stockage représentées à la figure 4, représentant une variante de réalisation de l'invention, selon laquelle chacune des unités de stockage porte un dissipateur à ailettes.

### DESCRIPTION DETAILLEE DES FIGURES

Dans la description qui va suivre, des chiffres de référence identiques désignent des pièces identiques ou ayant des fonctions similaires.

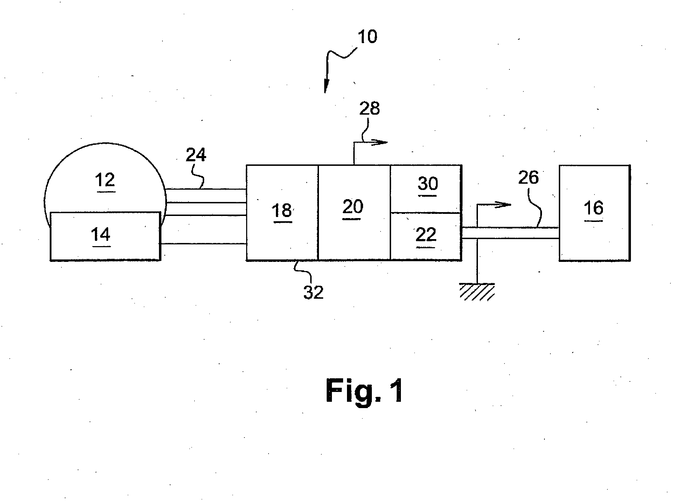

On a représenté à la figure 1 l'ensemble d'un dispositif 10 d'alimentation électrique pour un véhicule automobile réalisé conformément à l'invention.

Le dispositif 10 est destiné à relier au moins une machine électrique 12 à une batterie du véhicule automobile à moteur thermique. Cette machine 12 est tournante et est munie de capteurs 14 de la position de son rotor. Elle est susceptible de fonctionner en moteur électrique, par exemple pour démarrer le moteur thermique du véhicule, voire entraîner au moins une roue du véhicule et/ou en générateur électrique, par exemple pour récupérer l'énergie cinétique du véhicule lors d'un freinage, à une batterie 16 du véhicule. Cette machine, telle qu'un alterno-démarreur, est dite réversible. Cette machine est prise comme exemple non limitatif pour la suite de la description.

Pour mémoire on rappellera qu'un alterno-démarreur est un alternateur réversible permettant, d'une part, de transformer de l'énergie mécanique en énergie électrique lorsqu'il fonctionne en mode générateur électrique pour notamment recharger une batterie et /ou alimenter les consommateurs d'au moins un réseau de bord du véhicule automobile et d'autre part, de transformer de l'énergie électrique en énergie mécanique lorsqu'il fonctionne en mode moteur électrique, dit mode démarreur, pour notamment démarrer le moteur à combustion interne ou moteur thermique du véhicule automobile et, dans un mode de réalisation, éviter que le moteur thermique cale.

Cet alterno-démarreur comporte des moyens de redressement de courant appelés onduleur comportant par exemple des transistors du type MOSFET pilotés par une unité électronique de commande et de contrôle comme décrit par exemple dans les documents FR A 2 745 444 et FR A 2 745 445.

Cette unité électronique de commande et de contrôle reçoit des signaux provenant de capteurs de la position angulaire du rotor de la machine et comporte également des pilotes, dits drivers, qui sont des éléments de puissance et qui commandent les transistors du type MOSFET. Ces pilotes, dans un mode de réalisation, appartiennent à un étage de puissance comprenant également les transistors du type MOSFET de l'onduleur constituant un convertisseur électrique réversible de courant alternatif-continu dit « AC/DC » en mode générateur électrique. En mode moteur électrique, les transistors MOSFET de l'onduleur sont pilotés en tout ou rien pour commander en pleine onde les enroulements du stator de la machine ou en variante par une commande à largeurs d'impulsions variables, c'est à dire une technologie de découpage appelé MLI (modulation par largeur d'impulsion) ou PWM en anglais.

Les éléments de contrôle appartiennent à un étage de contrôle de plus faible puissance.

Dans un mode de réalisation, l'étage de puissance comprend une carte électronique, de puissance portant les éléments de puissance, tels que les transistors du type MOSFET et les drivers, et l'étage de contrôle comprend une carte électronique de commande portant les éléments de contrôle.

Dans ces documents précités l'alterno-démarreur est polyphasé.

Dans un mode de réalisation décrit dans les documents WO 02/080334 et WO 03/088471, l'alterno-démarreur appartient à un agencement pour véhicule automobile comportant au moins deux unités de stockage d'énergie électrique. L'une de ces unités de stockage est une batterie et l'autre un super condensateur c'est-à-dire une capacité de grande valeur appelée Ultra capacité. On notera qu'en mode démarreur (fonctionnement en mode moteur électrique), l'agencement permet d'alimenter l'alterno-démarreur avec une tension supérieure à celle en mode générateur.

Ce type d'agencement permet de récupérer de l'énergie lors du freinage et comporte deux réseaux électriques de distribution, au moins un commutateur ou un circuit à deux interrupteurs et un convertisseur continu-continu, dit convertisseur DC/DC, permettant de convertir des tensions et de fonctionner à deux tensions différentes.

Pour plus de précisions on se reportera à ces documents sachant que l'onduleur est un convertisseur électronique de courant.

Bien entendu, l'agencement peut faire appel à une machine électrique tournante telle qu'un alternateur simple relié électriquement à une batterie.

Dans un mode de réalisation cet alternateur est associé à un démarreur monté en parallèle avec l'alternateur entre une première borne reliée à la masse et une deuxième borne relié à un circuit permettant dans un mode de réalisation de mettre en série deux batteries, par exemple de 12V, pour alimenter le démarreur en 24V au démarrage et de mettre en parallèle ces deux batteries auprès le démarrage du véhicule automobile.

Le dispositif 10 comporte donc au moins un convertisseur électronique 18, 22 et une unité 20 de stockage d'énergie électrique. Ce dispositif comporte deux réseaux électriques, l'un dédié à la puissance (les unités de stockage 20 étant en série) et adapté à la récupération d'énergie, l'autre dédié à l'énergie pour notamment recharger la batterie 16 connectée au réseau de bord du véhicule et/ou alimenter ce réseau de bord.

Dans un premier mode de réalisation non limitatif, le dispositif 10 comporte un convertisseur continu-continu 22 de tension.

Dans un deuxième mode de réalisation non limitatif, le dispositif 10 comporte un onduleur 18. L'onduleur est un convertisseur réversible DC/AC. Il fonctionne en convertisseur AC/DC lorsque la machine est en mode générateur électrique (il est souvent appelé pont redresseur), et en convertisseur DC/AC lorsque la machine est en mode moteur électrique.

Dans un troisième mode de réalisation non limitatif, le dispositif 10 comporte un onduleur 18 et un convertisseur continu-continu 22.

Dans un quatrième mode de réalisation, dans l'exemple de réalisation non limitatif qui a été représenté à la figure 1, le dispositif 10 comporte trois convertisseurs électroniques, à savoir un onduleur 18, un convertisseur continu-continu 22, et en plus un interrupteur bi-position 30 ou deux interrupteurs 30, qui sont reliés entre eux par des connectiques de puissance tels que des bus barres (non représentés).

L'onduleur 18, de manière précitée, est un convertisseur électrique réversible de courant alternatif-continu dit "AC/DC" en mode générateur électrique ou continu alternatif dit "DC/AC" en mode moteur électrique.

Le convertisseur continu-continu 22 permet notamment de convertir une tension côté unité de stockage d'énergie 20, ladite tension se situant dans une plage de valeurs, ici de manière non limitative entre 6V et 35V, en une tension compatible avec celle de la batterie 16, la batterie alimentant un réseau de bord par exemple de l'ordre de 12 volts.

L'interrupteur bi-position 30 (ou les interrupteurs 30) permet quant à lui de déterminer le mode de fonctionnement de la machine électrique 12.

Dans l'exemple pris, le mode générateur comprend deux phases : une phase dite alternateur, et une phase dite récupératrice d'énergie, le mode moteur comprend une phase de démarrage et d'assistance dynamique.

Le mode de fonctionnement de la machine avec un interrupteur bi-position est le suivant :
- l'interrupteur relie l'onduleur 18 et l'unité de stockage 20 dans le mode moteur, et dans la phase récupératrice d'énergie,
- l'interrupteur relie l'onduleur 18 et la batterie 16 dans la phase alternateur.
On notera que dans un autre mode de réalisation, il n'existe pas d'interrupteur.

Le dispositif 10 est à cet effet relié par des câbles 24 à la machine électrique, par des câbles 26 à la batterie, et par des câbles 28 à un réseau d'alimentation électrique du véhicule.

Le dispositif 10 permettant de récupérer l'énergie cinétique du véhicule à l'aide de la machine électrique, cette architecture est plus particulièrement connue sous le nom d'architecture "14+X".

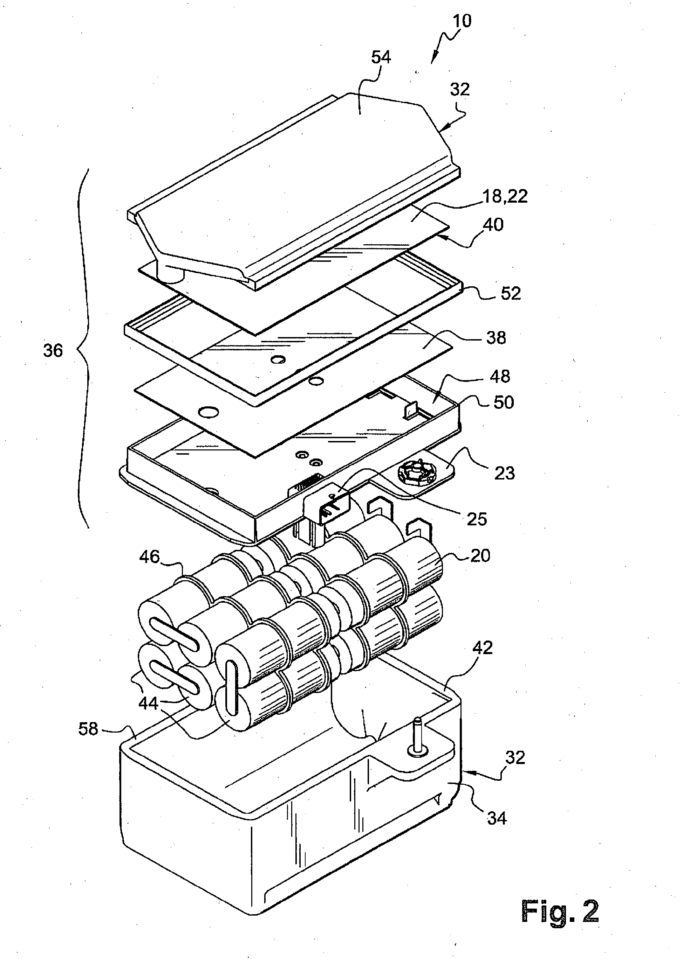

Comme l'illustrent les figures 1 et 2, le dispositif 10 comporte un boîtier unique 32 dans lequel sont agencés le(s) convertisseur(s) électronique(s) 18, 22 et le(s) unité(s) 20 de stockage d'énergie électrique notamment pour réduire les longueurs des connectiques entre ces éléments, de manière à limiter les effets des inductances de liaison.

D'une manière générale, le boîtier 32 comporte une partie inférieure 34, formant un bac 34 de réception d'au moins une d'unité 20 de stockage d'énergie électrique.

Cette partie inférieure 34 est complétée par au moins une partie supérieure 36, coiffant la partie inférieure 34, et recevant au moins une carte électronique de commande 38 et au moins une carte électronique de puissance 40 qui comporte les convertisseur(s) électronique(s) 18, 22, 30, c'est à dire l'onduleur 18, le convertisseur continu-continu 22, et l'interrupteur bi-position 30.

Plus particulièrement, la partie inférieure 34 présente la forme d'un premier bac sensiblement parallélépipédique, ouvert à son extrémité supérieure 42, qui reçoit, selon une caractéristique, au moins deux unités 20 de stockage d'énergie électrique dits "supercondensateurs" ou Ultra capacité montées en série.

Dans un premier exemple de réalisation non limitatif, les unités de stockage 20 sont agencées dans le sens de la longueur.

Dans un deuxième mode de réalisation non limitatif, les unités de stockage 20 sont agencées dans le sens de la largeur.

Dans un troisième mode de réalisation non limitatif, les unités de stockage 20 sont agencées dans le sens de la hauteur.

Selon une variante de réalisation, les unités de stockage 20 sont agencées pour partie dans le sens de la longueur et pour partie dans le sens de la largeur ou de la hauteur.

Selon les dimensions des unités de stockage 20, on choisira la meilleure disposition des trois modes permettant d'optimiser la place nécessaire pour les composants électroniques intégrés dans le boîtier 32, ici dans l'exemple dans le sens de la hauteur.

Dans une première variante applicable aux trois modes, les unités 20 de stockage d'énergie 20 sont disposées en étages, les unités 20 d'un premier étage étant décalées par rapport au deuxième étage de sorte que deux unités 20 du deuxième étage sont en contact tangentiel avec une même unité 20 du premier étage. Le contact peut être direct ou indirect.

Dans une deuxième variante applicable aux trois modes, telle qu'elle a été représentée sur la figure 2, la partie inférieure reçoit, des alignements axiaux 44 d'unités 20 de stockage d'énergie électrique qui sont agencés dans le sens de la longueur, mais cette disposition n'est pas limitative de l'invention. Les alignements 44 d'unités 20 de stockage d'énergie électrique pourraient en effet être agencés dans le sens de *la largeur. Les unités de stockage d'énergie de deux alignements voisins sont maintenues par des moyens de maintien 46. Tout mode de réalisation de ces moyens de maintien peut convenir à la bonne mise en oeuvre de l'invention. Sur les figures, les moyens de maintien sont composés par des colliers élastiques 46, mais il pourrait s'agir de formes intégrées avec la partie inférieure 34, ou encore des unités 20 de stockage d'énergie électriques elles-mêmes, chacune de celles-ci comportant alors des moyens d'emboîtement destinés à coopérer avec l'unité 20 voisine.

Les unités 20 ont dans le mode de réalisation de la figure 2 une forme globalement cylindrique de section circulaire.

Bien entendu en variante ces unités 20 de forme allongée ont une autre section par exemple de forme polygonale, telle qu'une section hexagonale. En variante la section est ovale.

La partie supérieure 36, quand à elle, comporte un second bac 48 qui coiffe l'extrémité supérieure 42 du premier bac 34.

Ce second bac peut notamment être porteur de connecteurs externes, par exemple un connecteur 23 destiné à recevoir des signaux de commande et un connecteur 25 destiné à recevoir un alimentation en puissance électrique.

Le second bac 48 est ouvert à son extrémité supérieure 50, et il est destiné à recevoir successivement, préférentiellement, du bas vers le haut du bac 48, la carte électronique de commande 38, un joint d'isolation 52, et la carte électronique 40 de puissance comportant l'onduleur 18 et le convertisseur continu-continu 22, et un couvercle 54 qui coiffe l'extrémité supérieure 50 du second bac 48. Ce couvercle 54 comporte des moyens supérieurs de refroidissement. Préférentiellement, la carte de puissance 40 est disposée au plus proche des moyens supérieurs de refroidissement. Ainsi, cette disposition évite de réchauffer les unités de stockage 20 par la chaleur dégagée par la carte de puissance. Le fond du second bac 48 est avantageusement en matière électriquement isolante pour éviter un réchauffement des unités de stockage.

Les unités de stockage 20 d'énergie subissent de nombreux cycles de charge et de décharge. Par exemple, lorsque le véhicule automobile démarre, il se produit une décharge d'électricité très intense. Par exemple encore, les unités de stockage 20 sont chargées avec un courant électrique de forte intensité lors des périodes de freinage récupératif.

Lorsque du courant électrique est libéré, lors des opérations de décharge, ou stocké, lors des opérations de charge, les unités de stockage 20 dégagent de la chaleur. La quantité de chaleur dégagée est proportionnelle à l'intensité du courant électrique qui circule en charge ou en décharge.

De plus, ces cycles de charge et de décharge sont susceptibles de se succéder à un rythme très élevé, notamment lorsque le véhicule roule en ville et que le conducteur est amené à arrêter et à redémarrer fréquemment le véhicule.

Or, pour que les unités de stockage 20 puissent stocker efficacement le courant électrique, elles doivent être maintenues dans une plage de températures de fonctionnement qui est bornée par une température maximale de fonctionnement et par une température minimale de fonctionnement.

Selon une caractéristique, pour maintenir la température des unités de stockage en deçà d'une température maximale de fonctionnement, le premier bac 34 comporte des moyens de refroidissement permettant de dissiper une partie de la chaleur que les unités de stockage 20 génèrent.

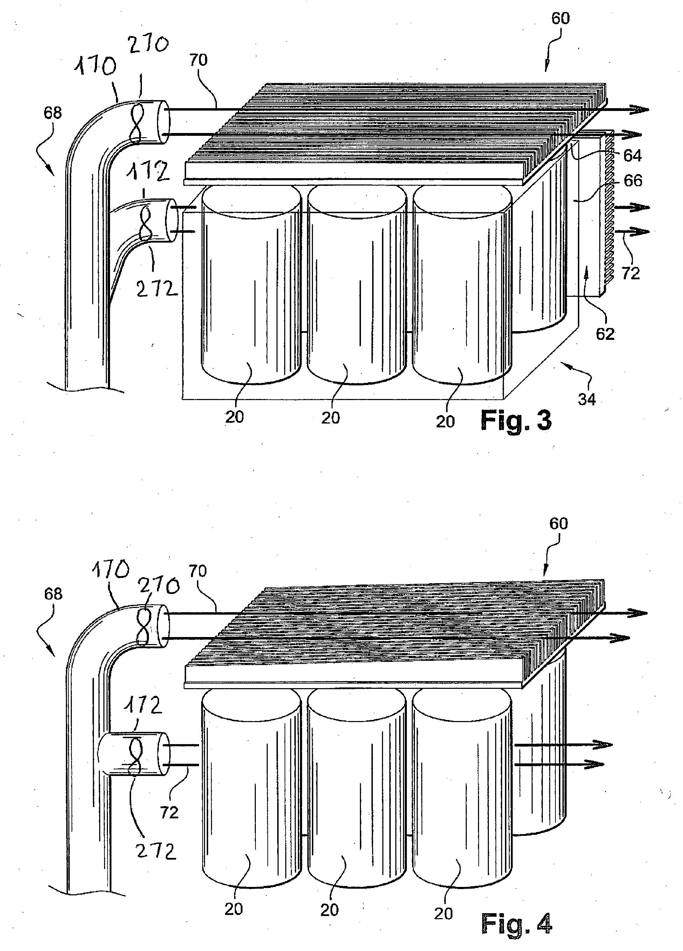

Dans les modes de réalisation des figures 3 à 5, les moyens de refroidissement comportent un premier dispositif de refroidissement 60 et un deuxième dispositif de refroidissement 62 dont chacun consiste ici en un dissipateur à ailettes.

Comme on peut le voir à la figure 3, ici, le premier dispositif de refroidissement 60 est agencé au niveau d'une première face 64 du premier bac 34 et le deuxième dispositif de refroidissement 62 est agencé au niveau d'une deuxième face 66 du bac 34.

Les moyens de refroidissement comportent un système 68 pour produire un flux d'air orienté vers chacun des deux dispositifs de refroidissement 60, 62 pour favoriser la dissipation de chaleur par les dispositifs de refroidissement par convection.

Le système 68 constitue une forme de réalisation de moyens de production de flux d'air

Ainsi, un premier flux d'air 70 est orienté vers le premier dispositif de refroidissement 60 et un deuxième flux d'air 72 est orienté vers le deuxième dispositif de refroidissement 62.

Selon une caractéristique les moyens de refroidissement comportent des moyens de commande des dispositifs de refroidissement pour faire varier la quantité de chaleur que les dispositifs de refroidissement 60, 62 sont destinés à dissiper.

Selon une caractéristique les deux dispositifs de refroidissement 60, 62 sont aptes à être commandés de manière sélective pour mieux réguler la chaleur que les moyens de refroidissement sont destinés à dissiper.

Selon un premier mode de réalisation, les moyens de commande sont réalisés de manière à faire varier le débit des deux flux d'air 70, 72 dirigés vers chacun des dispositifs de refroidissement 60, 62.

Selon un premier mode de réalisation, les moyens de commande sont réalisés de manière lorsque la quantité de chaleur à dissiper par les moyens de refroidissement est relativement faible, le débit des flux d'air 70, 72 est nul, et lorsque la quantité de chaleur à dissiper augmente, lorsque les unités de stockage 20 dégagent de la chaleur lors des opérations de décharge, ou lors des opérations de charge, le débit des flux d'air 70, 72 augmente.

Selon un autre mode de réalisation, les moyens de commande sont réalisés de manière que l'un ou l'autre des deux flux d'air 70, 72 soit établi.

Ici, le premier dispositif de refroidissement 60 est plus volumineux et est apte à dissiper une quantité de chaleur plus importante que le deuxième dispositif de refroidissement 62.

Ainsi, par exemple, lorsque la quantité de chaleur à dissiper est peu importante, seul deuxième le flux d'air 72 associé au deuxième dispositif de refroidissement 62 est établi, lorsque la quantité de chaleur à dissiper devient plus importante, c'est alors le premier flux d'air 70 seul qui est établi, et lorsque les moyens de refroidissement doivent dissiper une quantité maximale de chaleur, les deux flux d'air 70, 72 sont établis simultanément.

On a représenté à la figure 4 une variante de réalisation selon laquelle les moyens de refroidissement comportent un seul dispositif de refroidissement 60, qui consiste ici aussi en un dissipateur à ailettes.

Les moyens de refroidissement comportent par contre des moyens pour produire deux flux d'air 70, 72 différents. Le premier flux d'air 70 est associé au dispositif de refroidissement 60, pour augmenter sa capacité à dissiper de la chaleur par convection forcée. Le deuxième flux d'air 72 circule à l'intérieur du premier bac 34, de manière à venir refroidir directement les unités de stockage 20 par convection.

D'une manière similaire au mode de réalisation décrit précédemment en référence à la figure 3, les moyens 68 de production des flux d'air sont commandés par les moyens de commande, pour faire varier le débit de chacun des flux d'air 70, 72 en fonction de la chaleur dégagée par les unités de stockage 20.

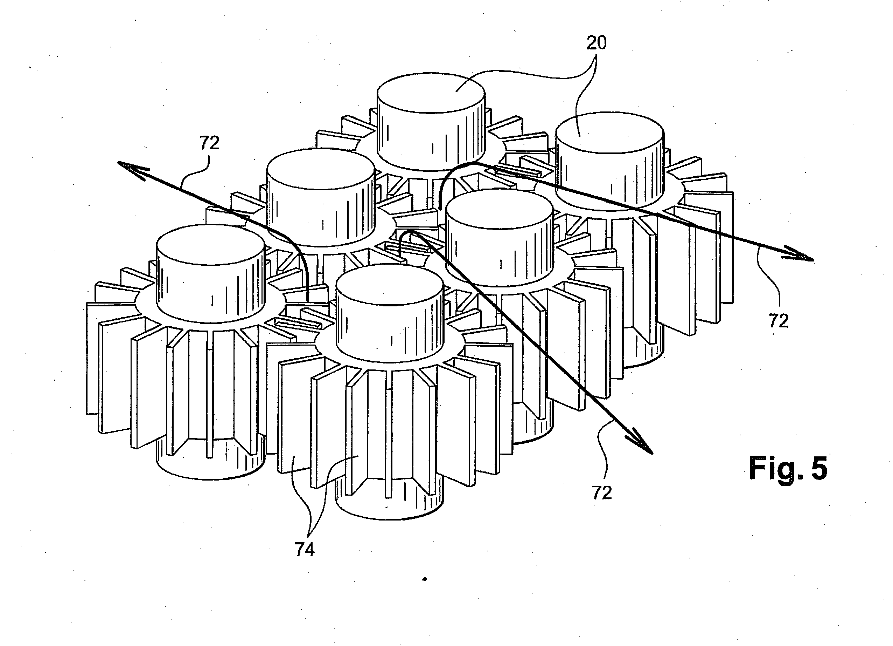

Pour améliorer le refroidissement direct des unités de stockages 20, et comme on peut le voir à titre de variante représentée à la figure 5, un dissipateur à ailettes de refroidissement 74 est monté sur chaque unité de stockage 20 pour favoriser les échanges de chaleur par convection avec le deuxième flux d'air 72.

Selon une variante, les moyens de production de flux d'air 68 sont aptes à faire circuler un seul flux d'air 70 ou 72 vers l'un seulement des deux dissipateurs 60 ou 62, et les moyens de commande sont aptes à faire varier le débit de ce flux d'air 70 ou 72 en fonction de la quantité de chaleur à dissiper.

Selon une variante de réalisation non représentée, les moyens de refroidissement comportent un tronçon froid d'un circuit de refroidissement du véhicule, qui est apte à absorber une certaine quantité de la chaleur produite par les unités de stockage, et les moyens de commande sont aptes à commander la circulation de liquide de refroidissement dans ce tronçon froid, en fonction de la quantité de chaleur à dissiper.

Selon encore une autre variante de réalisation non représentée, les moyens de refroidissement comportent une cellule à effet Peltier.

Selon le principe connu de l'effet Peltier, lorsque la cellule est alimenté avec du courant électrique, une de ses faces, devient froide, c'est-à-dire qu'elle absorbe de la chaleur, tandis que l'autre face devient chaude, c'est-à-dire qu'elle dégage de la chaleur. En d'autres termes, la cellule à effet Peltier fonctionne comme une pompe à chaleur qui absorbe la chaleur par une face pour la rejeter par l'autre face.

Ainsi, en modifiant l'intensité du courant électrique alimentant la cellule à effet Peltier, par les moyens de commande, il est possible de faire varier la quantité de chaleur absorbée par la face dite "froide".

Ainsi, grâce aux moyens de commande des dispositifs de refroidissement selon l'invention, en ajustant la quantité de chaleur que les moyens de refroidissement sont aptes à dissiper, il est possible de limiter l'énergie consommée par les moyens de refroidissement pour dissiper la chaleur.

De plus, selon un autre aspect de l'invention pour limiter l'échauffement des unités de stockage 20, le bac 34 comporte aussi des moyens pour isoler thermiquement les unités de stockage 20 pour empêcher qu'une partie de la chaleur produite par des éléments extérieurs au dispositif d'alimentation 10 comme par exemple le moteur du véhicule ou bien le radiateur du système de refroidissement du moteur ne soit transmise aux unités de stockage 20.

Il sera compris que l'invention n'est pas limitée aux seuls dispositifs de refroidissement des unités de stockage qui viennent d'être décrits, et que le bac peut comporter d'autres dispositifs de refroidissement aptes à être commandés, ou pilotés par les moyens de commande selon l'invention.

Il sera aussi compris qu'en plus des dispositifs de refroidissement pilotés tels que décrits précédemment, le dispositif d'alimentation 10 peut aussi comporter des moyens de refroidissement fonctionnant de manière constante ou continue, comme par exemple des moyens pour relier thermiquement les unités de stockage à une source froide du véhicule.

Ainsi, par exemple, le dispositif d'alimentation 10 comporte un caloduc reliant thermiquement les unités de stockage à une partie froide de la caisse du véhicule.

Ainsi qu'il ressort de la description et des dessins les deux flux d'air 70, 72 sont dirigés dans le même sens. Les moyens de production de flux d'air 68 comportent une conduite respectivement 170, 172 pour chacun des flux d'air 70, 72.

Les deux dispositifs de refroidissement sont indépendants l'un de l'autre.

Le dissipateur à ailette 60 des figures 3 et 4 coiffe le bac 34 et remplace la partie supérieure 36 en sorte que l'électronique de la figure 2 est déportée. En variante le dissipateur 60 est accolé à l'autre bord longitudinal du bac 34, c'est-à-dire parallèle à l'autre dissipateur à ailettes 62 accolé à l'autre bord. Dans ce cas la partie supérieure de la figure 2 peut être conservée. En variante le dissipateur 60 est accolé à la face inférieure du bac 34.

En variante trois faces au moins du bac sont recouvertes par un dissipateur à ailettes, chaque dissipateur étant balayée par un flux d'air , les flux d'air étant indépendants les uns des autres.

En variante les trois faces du bac sont recouvertes par exemple par deux dissipateurs à ailettes et une cellule à effet Peltier à quantité de chaleur absorbée variable.

On peut combiner un dispositif à dissipateur à ailettes balayé par un flux d'air avec une cellule indépendante à effet Peltier et/ou un tronçon froid indépendant d'un circuit de refroidissement du véhicule.

Toutes les combinaisons sont possibles et dépendent des applications ; les deux dispositifs de refroidissement étant commandés de manière sélective, par exemple de manière différée, par les moyens de commande pour mieux dissiper la chaleur.

Un ventilateur, respectivement 270, 272 peut être monté dans chaque conduite 170, 172.

Chaque ventilateur 270, 272 est dans un mode de réalisation pilotable, par exemple en fonction de la température de ou des unités de stockage d'énergie 20. A cet effet on peut prévoir un capteur de température à l'intérieur du bac 34.

Ce capteur commande alors la mise en route des ventilateurs par exemple de manière sélective. Les ventilateurs peuvent intervenir de manière différée.

Comme décrit ci-dessus à titre d'exemple, lorsque la quantité de chaleur à dissiper est peu importante, seul deuxième le flux d'air 72 associé au deuxième dispositif de refroidissement 62 est établi; le ventilateur 272 étant alors actif et le ventilateur 170 inactif. Lorsque la quantité de chaleur à dissiper devient plus importante, c'est alors le premier flux d'air 70 seul qui est établi; le ventilateur 270 étant alors actif et le ventilateur 272 inactif.

Lorsque les moyens de refroidissement doivent dissiper une quantité maximale de chaleur, les deux flux d'air 70, 72 sont établis simultanément et les deux ventilateurs 270, 272 sont actifs.

On peut augmenter les débits des flux d'air 70, 72 de manière sélective en augmentant la vitesse du ventilateur concerné. Un régulateur de vitesse peut donc être associé à chaque ventilateur. Ce régulateur reçoit une information sur la quantité de chaleur à dissiper et notamment sur la température des unités 10.

Par exemple, comme expliqué ci-dessus les débits d'air 70, 72 peuvent être nul au départ puis augmenter et ce de manière sélective, le débit 70 augmentant sélectivement par exemple plus que le débit 72.

La taille de la conduite 170 est dans un mode de réalisation différente de celle de la conduite 172.

Les conduites 170, 172 peuvent être indépendantes les unes des autres, ou en variante, comme visible à la figure4, comporter une partie commune.

Néanmoins les dissipateurs à ailettes et les flux d'air sont indépendants l'un de l'autre.

Comme décrit dans le document WO 02/080334 le dispositif 10 peut être destiné à relier une machine électrique tournante à deux réseaux de bord et à deux batteries de tensions différentes.

Le bac peut contenir à la fois des « supers condensateurs » et une batterie.

## Revendications

1. Dispositif (10) d'alimentation électrique pour un véhicule automobile, qui est destiné à relier au moins une machine électrique (12) à une batterie (16) du véhicule, et qui comporte un boîtier (32) dans lequel sont agencées **au moins deux unités de stockage d'énergie électrique (20) sous la forme d'ultra capacités montées en série** et comportant des moyens de refroidissements (60, 62, 70, 72) **des dites unités** de stockage (20), ledit boîtier comportant un bac de réception **des dites unités** de stockage (20), **caractérisé en ce que** les moyens de refroidissement comportent au moins deux dispositifs de refroidissement (60, 62), qui sont aptes à être commandés de manière sélective par des moyens de commande pour réguler la quantité de chaleur que les moyens de refroidissement (60, 62) sont destinés à dissiper **et en ce que les deux dispositif de refroidissement (60, 62) sont indépendants l'un de l'autre.**

2. Dispositif (10) d'alimentation selon la revendication précédente, **caractérisé en ce que** la quantité de chaleur destinée à être dissipée par un premier dispositif de refroidissement (60) est différente de la quantité de chaleur destinée à être dissipée par un deuxième dispositif de refroidissement (62).

3. Dispositif (10) d'alimentation selon la revendication 1 ou 2, **caractérisé en ce que** les moyens de commande sont aptes à réguler la quantité de chaleur apte à être dissipée par chaque dispositif de refroidissement (60, 62).

4. Dispositif (10) d'alimentation selon l'une quelconque des revendications précédentes, **caractérisé en ce que** les moyens de refroidissement comportent un dispositif de refroidissement doté d'un tronçon froid d'un circuit de refroidissement du véhicule.

5. Dispositif (10) d'alimentation selon l'une quelconque des revendications précédentes, **caractérisé en ce que** les moyens de refroidissement comportent au moins un **dispositif de refroidissement sous la forme d'un dissipateur de chaleur** à ailettes (60, 62, 74).

6. Dispositif (10) d'alimentation selon la revendication 5, **caractérisé en ce que** les moyens de refroidissement comportent des moyens (68) de production d'un flux d'air (70, 72) orienté vers ledit au moins **dispositif de refroidissement sous la forme** d'un dissipateur à ailettes (60, 62, 74) et qui est commandé par les moyens de commande.

7. Dispositif (10) d'alimentation selon la revendication précédente, **caractérisé en ce que** les moyens de refroidissement comportent **au moins deux dispositifs de refroidissement sous la forme d'un dissipateur** à ailettes (60, 62, 74) et des moyens (68) pour produire un flux d'air (70, 72) qui est associé à chaque dissipateur à ailettes (60, 62, 74).

8. Dispositif (10) selon la revendication 7, **caractérisé en ce que** les moyens de commande sont configurés pour faire varier le débit des deux flux d'air (70, 72) dirigés vers chacun des dispositifs de refroidissement (60, 62).

9. Dispositif (10) selon la revendication 7 ou 8, **caractérisé en ce que** les deux flux d'air (70, 72) sont dirigés dans le même sens.

10. Dispositif (10) selon l'une quelconque des revendications 7 à 9, **caractérisé en ce que** les moyens (68) de production d'un flux d'air (70, 72) comportent une conduite (170, 172) pour chacun des flux d'air (70, 72).

11. Dispositif (10) selon la revendication 10, **caractérisé en ce qu'**un ventilateur (270, 272) pilotable est monté dans chaque conduite (170, 172).

12. Dispositif (10) d'alimentation selon l'une quelconque des revendications 6 à 11, **caractérisé en ce que** les moyens de refroidissement comportent au moins un dissipateur à ailettes (74) qui est directement en contact avec ladite au moins une unité de stockage (20).

13. Dispositif (10) d'alimentation selon l'une quelconque des revendications précédentes, **caractérisé en ce qu'**il comporte des moyens d'isolation thermique de ladite unité de stockage (20).

## Patentansprüche

1. Vorrichtung (10) für die elektrische Versorgung eines Kraftfahrzeugs, die dazu bestimmt ist, wenigstens eine elektrische Maschine (12) mit einer Batterie (16) des Fahrzeugs zu verbinden, und ein Gehäuse (32), in dem wenigstens zwei Einheiten (20) zum Speichern elektrischer Energie in Form ultrahoher Kapazität in einer Reihenschaltung angeordnet sind, und Kühlungsmittel (60, 62, 70, 72) für die Speichereinheiten (20) umfasst, wobei das Gehäuse einen Kasten für die Aufnahme der Speichereinheiten (20) aufweist, **dadurch gekennzeichnet, dass** die Kühlungsmittel wenigstens zwei Kühlungsvorrichtungen (60, 62) umfassen, die dafür ausgelegt sind, wahlweise durch Steuermittel gesteuert zu werden, um die Wärmemenge, die die Kühlungsmittel (60, 62) abführen sollen, zu regulieren, und dass die zwei Kühlungsvorrichtungen (60, 62) voneinander unabhängig sind.

2. Versorgungsvorrichtung (10) nach dem vorhergehenden Anspruch, **dadurch gekennzeichnet, dass** die Wärmemenge, die von einer ersten Kühlungsvorrichtung (60) abgeführt werden soll, von der Wärmemenge, die von einer zweiten Kühlungsvorrichtung (62) abgeführt werden soll, verschieden ist.

3. Versorgungsvorrichtung (10) nach Anspruch 1 oder 2, **dadurch gekennzeichnet, dass** die Steuermittel dafür ausgelegt sind, die Wärmemenge, die von jeder Kühlungsvorrichtung (60, 62) abgeführt werden kann, zu regulieren.

4. Versorgungsvorrichtung (10) nach einem der vorhergehenden Ansprüche, **dadurch gekennzeichnet, dass** die Kühlungsmittel eine Kühlungsvorrichtung umfassen, die mit einem kalten Teilstück eines Kühlkreises des Fahrzeugs versehen ist.

5. Versorgungsvorrichtung (10) nach einem der vorhergehenden Ansprüche, **dadurch gekennzeichnet, dass** die Kühlungsmittel wenigstens eine Kühlungsvorrichtung in Form einer Wärmeabführeinrichtung (60, 62, 74) mit Rippen umfassen.

6. Versorgungsvorrichtung (10) nach Anspruch 5, **dadurch gekennzeichnet, dass** die Kühlungsmittel Mittel (68) für die Erzeugung eines Luftstroms (70, 72), der zu der wenigstens einen Kühlungsvorrichtung in Form einer Wärmeabführeinrichtung (60, 62, 74) mit Rippen orientiert ist und durch die Steuermittel gesteuert wird, umfassen.

7. Versorgungsvorrichtung (10) nach dem vorhergehenden Anspruch, **dadurch gekennzeichnet, dass** die Kühlungsmittel wenigstens zwei Kühlungsvorrichtungen in Form einer Wärmeabführeinrichtung (60, 62, 74) mit Rippen und Mittel (68) zum Erzeugen eines Luftstroms (70, 72), der jeder Wärmeabführeinrichtung (60, 62, 74) mit Rippen zugeordnet ist, umfassen.

8. Vorrichtung (10) nach Anspruch 7, **dadurch gekennzeichnet, dass** die Steuermittel konfiguriert sind, den Durchfluss von zwei Luftströmen (70, 72), die zu jeder der Kühlungsvorrichtungen (60, 62) gerichtet sind, zu verändern.

9. Vorrichtung (10) nach Anspruch 7 oder 8, **dadurch gekennzeichnet, dass** die zwei Luftströme (70, 72) in dieselbe Richtung gerichtet sind.

10. Vorrichtung (10) nach einem der Ansprüche 7 bis 9, **dadurch gekennzeichnet, dass** die Mittel (68) für die Erzeugung eines Luftstroms (70, 72) eine Leitung (170, 172) für jeden der Luftströme (70, 72) aufweisen.

11. Vorrichtung (10) nach Anspruch 10, **dadurch gekennzeichnet, dass** in jeder Leitung (170, 172) ein steuerbarer Ventilator (270, 272) montiert ist.

12. Versorgungsvorrichtung (10) nach einem der Ansprüche 6 bis 11, **dadurch gekennzeichnet, dass** die Kühlungsmittel wenigstens eine Wärmeabführeinrichtung (74) mit Rippen umfassen, die direkt mit der wenigstens einen Speichereinheit (20) in Kontakt ist.

13. Versorgungsvorrichtung (10) nach einem der vorhergehenden Ansprüche, **dadurch gekennzeichnet, dass** sie Mittel zur Wärmeisolation der Speichereinheit (20) umfasst.

## Claims

1. Electric power supply device (10) for a motor vehicle, which is intended to connect at least one electric machine (12) to a battery (16) of the vehicle, and which comprises a housing (32) in which there are arranged at least two electrical energy storage units (20) in the form of ultracapacitors mounted in series and comprising means (60, 62, 70, 72) for cooling the said storage units (20), the said housing comprising a receptacle for the said storage units (20), **characterized in that** the cooling means comprise at least two cooling devices (60, 62) which are able to be controlled selectively by control means in order to regulate the quantity of heat that the cooling means (60, 62) are intended to dissipate, and **in that** the two cooling devices (60, 62) are independent of one another.

2. Power supply device (10) according to the preceding claim, **characterized in that** the quantity of heat intended to be dissipated by a first cooling device (60) is different from the quantity of heat intended to be dissipated by a second cooling device (62).

3. Power supply device (10) according to Claim 1 or 2, **characterized in that** the control means are able to regulate the quantity of heat which can be dissipated by each cooling device (60, 62).

4. Power supply device (10) according to any one of the preceding claims, **characterized in that** the cooling means comprise a cooling device equipped with a cold section of a cooling circuit of the vehicle.

5. Power supply device (10) according to any one of the preceding claims, **characterized in that** the cooling means comprise at least one cooling device in the form of a heat sink with fins (60, 62, 74).

6. Power supply device (10) according to Claim 5, **characterized in that** the cooling means comprise means (68) for producing an air flow (70, 72) which is oriented towards the said at least one cooling device in the form of a heat sink with fins (60, 62, 74) and which is controlled by the control means.

7. Power supply device (10) according to the preceding claim, **characterized in that** the cooling means comprise at least two cooling devices in the form of a heat sink with fins (60, 62, 74) and means (68) for producing an air flow (70, 72) which is associated with each heat sink with fins (60, 62, 74).

8. Device (10) according to Claim 7, **characterized in that** the control means are configured to vary the flow rate of the two airflows (70, 72) directed towards each of the cooling devices (60, 62).

9. Device (10) according to Claim 7 or 8, **characterized in that** the two air flows (70, 72) are directed in the same direction.

10. Device (10) according to any one of Claims 7 to 9, **characterized in that** the means (68) for producing an air flow (70, 72) comprise a pipe (170, 172) for each of the air flows (70, 72).

11. Device (10) according to Claim 10, **characterized in that** a controllable fan (270, 272) is mounted in each pipe (170, 172).

12. Power supply device (10) according to any one of Claims 6 to 11, **characterized in that** the cooling means comprise at least one heat sink with fins (74) which is directly in contact with the said at least one storage unit (20).

13. Power supply device (10) according to any one of the preceding claims, **characterized in that** it comprises means for thermally insulating the said storage unit (20).
